Europäisches Patentamt

European Patent Office

Office européen des brevets

(19)

(11) Publication number: 0 398 641

A2

(12) **EUROPEAN PATENT APPLICATION**

(21) Application number: 90305214.0

(51) Int. Cl.⁵: G06F 15/40

(22) Date of filing: 15.05.90

(30) Priority: 15.05.89 US 352079

(43) Date of publication of application:
22.11.90 Bulletin 90/47

(84) Designated Contracting States:
DE FR GB

(71) Applicant: International Business Machines
Corporation
Old Orchard Road
Armonk, N.Y. 10504(US)

(72) Inventor: Copenhaver, Diane Re
4500 Secluded Hollow
Austin, Texas 78727(US)
Inventor: Horn, Gary Randall
12046 Lincolnshire
Austin, Texas 78758(US)
Inventor: Jeffries, Lynn Mary
6300 Sprucewood Cove
Austin, Texas 78731(US)

(74) Representative: Bailey, Geoffrey Alan
IBM United Kingdom Limited Intellectual
Property Department Hursley Park
Winchester Hampshire SO21 2JN(GB)

(54) Remote execution of database transactions.

(57) A method and data processing network for permitting the remote execution of database transactions by one or more personal computers without a direct access storage device (30). At least one personal computer without a direct access storage device is linked to a personal computer having a direct access storage device (28) and access to a selected database. Network and communications software installed on the personal computer having direct access storage devices is then utilized to remotely initiate each of the personal computers without direct access storage devices which is linked thereto. Next, a single copy of database server software code is installed on the personal computer having direct access storage devices and a catalog is created and stored which identifies selected personal computers without direct access storage devices which may access the database server software code. File redirection is then utilized to permit selected personal computers without direct access storage devices to remotely execute the database server software code so that database transactions may be remotely executed. In a preferred embodiment of the disclosed method, each individual personal computer without direct access storage device may be utilized to remotely execute database transactions as a server device, a requester device or a stand-alone device.

*Fig. 3*

# REMOTE EXECUTION OF DATABASE TRANSACTIONS

This invention relates in general to improvements in data processing systems and in particular to improvements in the remote execution of database transactions within a data processing system. Still more particularly, the present invention relates to the remote execution of database transactions by a network of computers.

Data processing systems are well known in the prior art. Such systems have increased in size and complexity to the point where it is often no longer feasible to concentrate the data and processing power of a single system at one location. In response to this problem and in an attempt to maximize the processing power and data available with minimal costs, modern data processing systems are often "distributed." That is, the system consists of multiple processors which are linked together on a data network. Individual processors are then linked to specific types of data which are stored together in so-called database format. The information within that database is then available to each processor linked to the data network.

The sharing of data stored within a particular database is generally accomplished in the prior art by the utilization of specialized database management software which is installed by means of a direct access storage device, such as a disk drive, and initiated by the operator of a particular processor. While this technique has been utilized for some time, the provision of multiple processors, each with sufficient direct access storage devices to initiate such communications has become an expensive consideration. Further, each processor must necessarily have and utilize a copy of suitable database management software in order to be able to access a remote database.

Viewed from a first aspect the invention provides a method for permitting the remote execution of database transactions by a computer without a direct access storage device, said method comprising the steps of:
linking said computer without a direct access storage device via a data network to a computer having a direct access storage device and access to a database;
installing database server software code on said computer having a direct access storage device; and
utilizing said computer without a direct access storage device to execute remotely said database server software code via file redirection wherein said computer without a direct access storage device is utilizable to execute remotely database transactions.

The present invention provides an improved data processing system which permits the remote execution of database transactions by personal computers without direct access storage devices.

The present invention permits the remote execution of database transactions by personal computers without direct access storage devices by linking at least one such personal computer without direct access storage devices to a personal computer having direct access storage devices and access to a database. Network and communications software installed on the personal computer having direct access storage devices is then utilized to remotely initiate each personal computer without direct access storage devices. Next, a single copy of database server software is installed on the personal computer having direct access storage devices and a catalog is created and stored which identifies selected personal computers without direct access storage devices which will be permitted to access the database server software. File redirection is then utilized to permit selected personal computers without direct access storage devices to remotely execute the database server software so that database transactions may be remotely executed. In a preferred embodiment of the disclosed method, each individual personal computer without direct access storage devices may be utilized to remotely execute database transactions as a server device, a requester device or a stand-alone device.

Viewed from a second aspect the invention provides a data processing network for permitting the remote execution of database transactions by a computer without a direct access storage device, comprising;
means linking said computer without a direct access storage device via a data network to a computer having a direct access storage device and access to a database;
a database server logic installed on said computer having a direct access storage device; and
means within said computer without a direct access storage devices for remotely executing said database server logic via file redirection wherein said computer without a direct access storage device is utilizable to remotely execute database transactions.

An embodiment of the invention will now be described, by way of example only, with reference to the accompanying drawings in which:

**Figure 1** depicts a pictorial representation of a data processing system which may be utilized to implement the method of the present invention;

**Figure 2** is a logic flow chart illustrating an embodiment of the present invention with regard to the establishment of a network permitting remote database transactions by personal computers without direct access storage devices; and

Figure 3 is a logic flow chart illustrating the retrieval of data by a personal computer without direct access storage devices in accordance with an embodiment of the present invention.

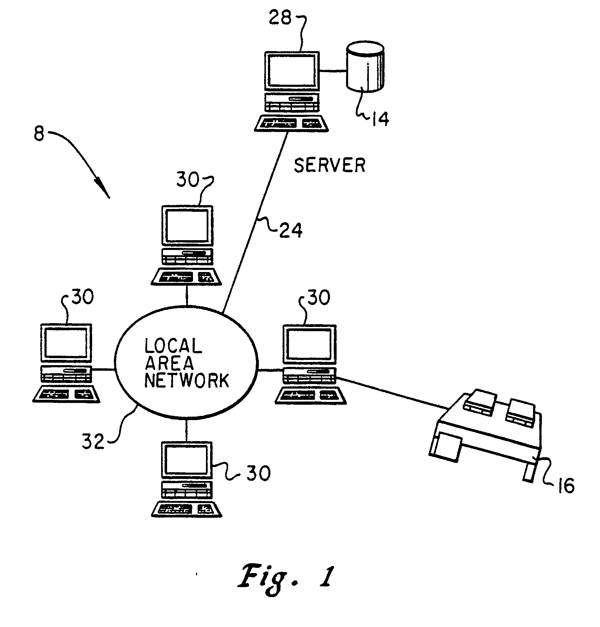

With reference now to the figures and in particular with reference to **Figure 1**, there is depicted a pictorial representation of a data processing system **8** which may be utilized to implement an embodiment of the present invention. As may be seen, data processing system **8** includes a network, such as Local Area Network (LAN) **32**, which preferably includes a plurality of individual personal computers **30**.

As is common in such data processing systems, an individual computer may be coupled to a storage device **14** and/or a printer/output device **16**. One or more such storage devices **14** may be utilized to store such network, communication and/or database management software code which may be desired or deemed necessary by the user of an individual computer. However, in accordance with an important aspect of the present invention, it may be seen that no individual computer **30** is coupled to a storage device **14**. Further, as a cost containment approach, each personal computer **30** is provided completely without a direct access storage device (DASD). That is, each personal computer **30** is assembled without a floppy disk drive or a hard disk file.

As will be discussed in greater detail herein, in accordance with the invention, it is possible to permit each personal computer **30** to remotely execute database transactions. This is accomplished despite the absence of a direct access storage device which is normally utilized to store the database management code necessary for such execution.

Still referring to **Figure 1**, it may be seen that a personal computer **28** which is coupled to a storage device **14** is coupled to Local Area Network (LAN) **32** via link **24**. The personal computer **28** will be utilized as LAN/database server **28** to permit each personal computer **30** to remotely execute database transactions.

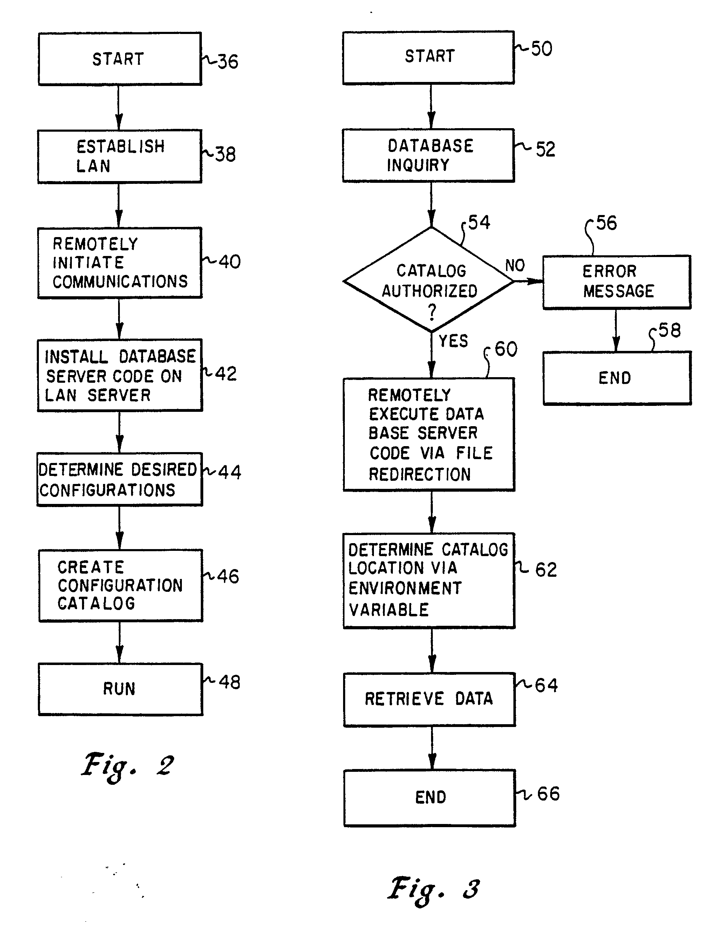

Referring now to **Figure 2**, there is depicted a logic flow chart illustrating the establishment of a network permitting remote database transactions by personal computers without direct access storage devices. As may be seen, the process begins at block **36** and thereafter block **38** is utilized to depict the establishment of a Local Area Network (LAN) in any manner well known in the art. Referring again to **Figure 1**, this step illustrates the linking of multiple personal computers **30** within Local Area Network (LAN) **32** and the establishment of a data network to LAN/database server **28**.

Thereafter, block **40** depicts the remote initiation of network and communications software within each personal computer **30**. This is accomplished, as those skilled in the art will appreciate, by utilizing network and communications software which is installed within LAN/database server **28** - (see **Figure 1**) which may be remotely initiated within each personal computer linked thereto by utilizing suitable software such as the Remote Initial Program Load (RIPL) software which is often utilized in conjunction with the personal computers manufactured by IBM Corporation.

Next, block **42** illustrates the installation of database server code on the Local Area Network (LAN) server. In accordance with this step a single copy of an appropriate database server software code is installed on LAN/database server **28** (see **Figure 1**). Next, as depicted in block **44**, the desired configuration for each personal computer **30** which is linked to the established Local Area Network (LAN) must be specified. It is possible for each personal computer **30** to be configured in one of three possible configurations. For example, an individual personal computer **30** without direct access storage devices may be configured as a server device, a requester device, or a stand-alone device. That is, an individual personal computer **30** may be utilized to provide database service to the remaining personal computers **30** or may simply act as a requester device requesting data from the database for use at the identified personal computer. Finally, each personal computer **30** may be configured as a stand-alone device. That is, running as if unconnected to any other personal computer for purposes of database transactions.

Finally, block **46** illustrates the creation of a configuration catalog. This configuration catalog is created and stored at LAN/database server **28** to catalog the location of each individual personal computer without direct access storage devices which is linked to LAN/database server **28** and which may remotely access the database server code which is installed on LAN/database server **28**. By utilizing this configuration catalog the system administrator may periodically view the system configuration and add or delete selected personal computers **30** from the catalog. During execution of the database management code this catalog is accessed via an environment variable. Thereafter, the process continues, as illustrated by block **48**.

With reference now to **Figure 3**, there is depicted a logic flow chart illustrating the retrieval of data by a personal computer without direct access storage devices in accordance with the method of the present invention. As is illustrated, the process begins at block 50 and thereafter proceeds to block **52** which depicts the initiation of a database inquiry by an individual personal computer **30**.

Next, block **54** illustrates a determination of whether or not the particular personal computer **30** is an authorized remote executor of the database server code in accordance with the configuration catalog which has been established at LAN/database server **28** (see **Figure 1**). If the personal computer **30** attempting to access the database is not an authorized remote executor of the database server code then block **56** depicts the transmission of an error message and the process terminates, as illustrated in block **58**.

In the event the particular personal computer **30** attempting a database inquiry is listed within the configuration catalog previously established as an authorized remote executor of the database server code then block **60** illustrates the remote execution of the database server code via file redirection. Those skilled in the art will appreciate that file redirection is a well known technigue whereby a particular processor may execute software code which is located at a second location. Thereafter, block **62** illustrates the determination of the catalog location via an environment variable. Next, block **64** illustrates the retrieval of the requested data and the process terminates as depicted at block **66**.

Those skilled in the art upon reference to the foregoing specification will appreciate that the Applicants herein have provided a novel and useful method whereby the services of a database may be widely disseminated without the necessity of providing each user thereof with a personal computer having a full compliment of direct access storage devices. The method of the present invention is additionally efficient in that it is necessary to provide only a single copy of the database server code at the Local Area Network (LAN) server which in turn may be utilized by multiple personal computers to remotely execute database transactions. The savings experienced in providing personal computers with minimal or non-existant direct access storage devices as well as the savings experienced in providing a single copy of the database server code will greatly enhance the availability of database services without the concomitant increase in costs normally associated therewith.

While the invention has been particularly shown and described with reference to a preferred embodiment, it will be understood by those skilled in the art that various changes in form and detail may be made therein without departing from the scope of the invention.

## Claims

1. A method for permitting the remote execution of database transactions by a computer without a direct access storage device (30), said method comprising the steps of:

linking said computer without a direct access storage device via a data network (32) to a computer having a direct access storage device (28) and access to a database

installing database server software code on said computer having a direct access storage device; and

utilizing said computer without a direct access storage device to execute remotely said database server software code via file redirection wherein said computer without a direct access storage device is utilizable to execute remotely database transactions.

2. A method as claimed in claim 1, wherein in a plurality of computers without a direct access storage device are linked to a single computer having a direct access storage device via said data network.

3. A method as claimed in any of claims 1 or 2 further including the steps of:

installing network and communications software code on said computer having a direct access storage device; and

remotely initiating each said computer without direct access storage device utilizing said network and communications software prior to utilizing each said computer without a direct access storage device to remotely execute said database server software code.

4. A method as claimed in any of claims 1, 2 or 3 wherein each said computer without a direct access storage device is utilizable to remotely execute database transactions as either a server device, a requester device, or a stand-alone device.

5. A method as claimed in any preceding claim further including the step of creating and storing a catalog at said computer having a direct access storage device identifying each computer without a direct access storage device.

6. A method as claimed in claim 5 wherein said catalog indicates whether a computer without a direct access storage device is executing database transactions as a server device, a requester device or a stand-alone device.

7. A method as claimed in any of claims 5 or 6 further including the step of determining the location of said catalog via an environment variable.

8. A method as claimed in any preceding claim, wherein each said computer without a direct access storage device and said computer having a direct access storage device is a personal computer.

9. A data processing network for permitting the remote execution of database transactions by a computer without a direct access storage device, comprising:

means linking said computer without a direct access storage device via a data network to a computer having a direct access storage device and access to a database;

a database server logic installed on said computer having a direct access storage device; and

means within said computer without a direct access storage device for remotely executing said database server logic via file redirection wherein said computer without a direct access storage device is utilizable to execute remotely database transactions.

10. A data processing network as claimed in claim 9, further comprising means for installing network and communications software code on said computer having a direct access storage device; and

means for remotely initiating each said computer without a direct access storage device utilizing said network and communications software prior to utilizing each said computer without a direct access storage device to remotely execute said database server software code.

*Fig. 1*

```
        START          ~36

    ESTABLISH          ~38
      LAN

    REMOTELY           ~40
    INITIATE
    COMMUNICATIONS

    INSTALL DATABASE
    SERVER CODE ON     ~42
    LAN SERVER

    DETERMINE DESIRED  ~44
    CONFIGURATIONS

    CREATE
    CONFIGURATION      ~46
    CATALOG

        RUN            ~48
```

*Fig. 2*

```
        START              ~50

    DATABASE               ~52
    INQUIRY

         /54                    /56
    CATALOG      NO      ERROR
    AUTHORIZED  ------>  MESSAGE
       ?
        |YES                     /58
         /60                    END
    REMOTELY
    EXECUTE DATA
    BASE SERVER
    CODE VIA FILE
    REDIRECTION

    DETERMINE CATALOG
    LOCATION VIA           ~62
    ENVIRONMENT
    VARIABLE

    RETRIEVE DATA          ~64

        END                ~66
```

*Fig. 3*